# EUROPÄISCHE PATENTSCHRIFT

(11) **EP 2 555 550 B1**
(45) Veröffentlichungstag und Bekanntmachung des Hinweises auf die Patenterteilung: **01.11.2017**
(21) Anmeldenummer: 12178796.4
(22) Anmeldetag: 01.08.2012
(51) Int. Cl.: H04W 16/14, H04W 72/08, H04W 88/18

(54) **Verfahren und Anordung zum automatisierten Zuweisen von Frequenzbereichen**
Method and apparatus for automatically allocating frequency ranges
Procédé et appareil d'attribution automatisée de plages de fréquence

(30) Priorität: 03.08.2011 DE 102011080380
(43) Veröffentlichungstag der Anmeldung: 06.02.2013
(73) Patentinhaber: ROBERT BOSCH GMBH, 70442 Stuttgart (DE)
(72) Erfinder: Beutnagel-Buchner, Uwe, 70327 Stuttgart (DE); Wilzeck, Andreas, 30989 Gehrden (DE); Dimitrov, Emil Kamenov, 30159 Hannover (DE)

(56) Entgegenhaltungen:
- WO-A1-2012/051303
- WO-A2-2010/117998
- WO-A2-2011/100103
- US-A1- 2010 309 806
- US-A1- 2011 069 690
- US-A1- 2011 096 770

## Beschreibung

Die Erfindung betrifft ein Verfahren zum automatisierten Zuweisen von Frequenzbereichen bzw. Frequenzbändern, insbesondere für eine drahtlose Audiokommunikation, und eine Anordnung zur Durchführung des Verfahrens.

### Stand der Technik

Die drahtlose Übertragung von Daten, bspw. von Audiodaten, wird u.a. bei Theatern, Bühnen, Fernsehen, Rundfunk sowie bei Konzerten genutzt. Dabei werden u.a. drahtlose Mikrofone eingesetzt, für deren Betrieb Frequenzen bzw. Frequenzbereiche oder auch Frequenzbänder zur Verfügung gestellt werden müssen. Beim Einsatz einer Vielzahl von Mikrofonen hat dies zur Folge, dass zur Verfügung stehende Frequenzbereiche mehrfach, bspw. zeitlich und örtlich, genutzt werden.

Es wird daher angestrebt, Verfahren zum Zuweisen von Frequenzen oder Frequenzbereichen zu entwickeln, welche die zur Verfügung stehenden Frequenzbereiche effektiv nutzen.

Die grundsätzliche Nutzung unterschiedlicher Frequenzbereiche wird weltweit durch die ITU und in Europa, etwas spezifischer, durch die ECC geregelt. Die tatsächliche Nutzung der einzelnen Frequenzbereiche unterliegt jedoch, im Rahmen vorgegebener Regeln, nationalem Recht. Die Regelung über die Nutzung erfolgt in Deutschland über die Bundesnetzagentur mittels der Vergabe von Lizenzen. Dabei erfolgt die Vergabe der Lizenzen in Deutschland bspw. durch Versteigerung oder auf Antrag. Dabei ist zu beachten, dass die Nutzung zeitlich und geografisch beschränkt sein kann.

Dies hat zur Folge, dass ein Frequenzbereich durch mehrere unterschiedliche Nutzer verwendet werden kann. Dazu gibt es unterschiedliche Modelle, diese sind bspw.:
- ein einzelner Nutzer,
- ein Primärnutzer und ein oder mehrere Sekundärnutzer,
- mehrere gleichberechtigte Nutzer.

Damit es bei mehreren unterschiedlichen Nutzern nicht zu gegenseitigen Störungen kommt, ist die Art und Weise der Nutzung der Frequenzbereiche reglementiert.

Die aktuelle Frequenznutzung von professionellen drahtlosen Mikrofonen (PWMS: Professional Wireless Microphone System), z.B. für Musik, Theater und Sportveranstaltungen, erfolgt im Frequenzbereich von 470 bis 790 MHz. In diesem Bereich befinden sich u.a. DVB-T-Sender für das terrestrische Fernsehen. Die PWMS sind in diesem Bereich Sekundärnutzer. PWMS sind sogenannte PMSE (Program Making and Special Events). Diese umfassen neben PWMS andere drahtlose Komponenten und Systeme für Liververanstaltungen und Produktionen, wie bspw. Videokameras, In-Ear-Monitor-Systeme, Talk-Back-Systeme, Bühnentechniksteuerung usw.

Das Verfahren für eine neue Installation und Nutzung von PWMS ist wie folgt:
- Identifizierung eines verfügbaren Frequenzbereichs im Bereich von 470 bis 790 MHz, zwischen den von DVB-T-Sendern genutzten Bändern, in Abhängigkeit des geografischen Orts anhand einer Tabelle,
- Antrag an die Bundesnetzagentur zur Nutzung dieses Frequenzbereichs,
- Erteilung der örtlich und zeitlich beschränkten Lizenz für die Nutzung,
- Einstellen der drahtlosen Mikrofone auf eine der zugeteilten Frequenzen.

Durch die sogenannte Digitale Dividende, bei der ein Teil des ehemaligen UHF-Bereichs für die analoge TV-Ausstrahlung an die Mobilfunkindustrie für das künftige mobile Breitbandnetz versteigert wurde, wurde der Anteil des nutzbaren Frequenzbereichs für PWMS eingeschränkt. Eine zusätzliche Herausforderung für die Nutzung von PWMS kann entstehen, wenn dieser Bereich von 470 bis 790 MHz auch für andere Nutzer, z.B. für Short Range Devices (SRD), freigegeben wird. Ein SRD ist ein Gerät, das im Nahbereich eine Funkkommunikation, bspw. im Home-Entertainment-Bereich, nutzt.

Insgesamt wird ein zuvor weitgehend statisches Koexistenz-Szenario in ein dynamisches überführt, das das vorstehend genannte nicht automatisierte Verfahren in seinem Nutzen einschränkt. Systeme, die dieses automatisierte Verfahren zur itelligenten Frequenznutzung beherrschen, werden allgemein als kognitive Systeme bzw. Cognitive Radio Systems (CRS) bezeichnet. Eine Möglichkeit, ein CRS zu realisieren, ist bspw. die Nutzung der Frequenzabtastung (Sensing) in Kombination mit einer Datenbank. Ein C-PMSE ist ein kognitives PMSE-System, nämlich ein anwendungsspezifisches CRS. Es kann aber auch CRS für andere Anwendungen, bspw. mit Short Range Devices (SRDs), geben.

Aus der Druckschrift DE 10 2005 054 258 A1 ist ein Verfahren zum Zuweisen einer Frequenz für eine drahtlose Audiokommunikation bekannt. Dabei ist vorgesehen, dass eine Anfrage für eine Frequenz für eine drahtlose Audiokommunikation empfangen wird, wobei die Anfrage den Standort, den Zeitraum, die Anzahl der benötigten drahtlosen Kommunikationsstrecken und die zur Verfügung stehende Technik für die drahtlose Audiokommunikation umfasst. Anschließend wird die Anfrage mit in Datenbanken gespeicherten Informationen hinsichtlich einer Frequenzbelegung verglichen. Mögliche Frequenzbereiche werden ausgegeben. Abschließend werden die möglichen Frequenzbereiche Sende- und Empfangseinheiten der angefragten drahtlosen Kommunikation zugewiesen. Es wird dabei ein sogenannter Frequenzinformationsserver beschrieben, der die Anfragen empfängt und die Zuweisung nach Durchführen einer Berechnung unter Berücksichtigung von Informationen, die in einer Datenbank in dem Server abgelegt sind, vornimmt.

Die Druckschrift DE 10 2009 046 544 A1 beschreibt ein Netzwerksystem für eine Audioeinrichtung und ein Verfahren zur Konfiguration eines Netzwerksystems. Das Netzwerksystem umfasst Audioeinrichtungen, die bspw. als drahtlose Mikrofonmodule ausgebildet sind. Weiterhin weist das Netzwerksystem mehrere Basisstationen und eine Steuerungseinrichtung auf. Die Mikrofonmodule sind den Basismodulen über Konfigurationsdateien zugeordnet. Die Basisstationen sind untereinander vernetzt. Mit der Steuerungseinrichtung werden die Konfigurationsdateien selektiert und angepasst. Auf Grundlage der Selektion wird ein Konfigurationsvorschlag gemacht, der dann eingestellt werden kann.

Die US 2011/0069690 A1 offenbart ein Verfahren zur Reduktion von Empfangsstörungen in der Umgebung von drahtlosen Sendern.

### Offenbarung der Erfindung

Vor diesem Hintergrund wird ein Verfahren zum automatisierten Zuweisen von Frequenzen mit den Merkmalen des Anspruchs 1 und eine Anordnung zur Durchführung des Verfahrens gemäß Anspruch 4 vorgestellt. Ausgestaltungen ergeben sich aus den abhängigen Ansprüchen und der Beschreibung.

Bei dem beschriebenen Verfahren wird eine automatisierte Lizenzvergabe und damit Frequenznutzung innerhalb eines zuvor festgelegten Frequenzportfolios, das mehrere, nicht notwendigerweise zusammenhängende Frequenzbereiche umfassen kann, ermöglicht. Weiterhin wird eine automatisierte koordinierte Koexistenz unterschiedlicher Nutzer innerhalb dieses vorher festgelegten Frequenzportfolios erreicht.

Mit dem beschriebenen Verfahren, zumindest in einigen der Ausführungen, ist es vorgesehen, dass unterschiedliche Funksystemen bzw. Nutzer automatisiert, in einem zuvor festgelegten Frequenzportfolio Lizenzen für einzelne Frequenzen bzw. Frequenzbereiche erhalten und diese dadurch nutzen können. Durch die Anwendung dieses Verfahrens für alle interessierten Nutzer ergibt sich eine automatisierte koordinierte Koexistenz der jeweils genutzten Funksysteme, ohne dass gegenseitige Störungen auftreten.

Das Verfahren ist für unterschiedliche Nutzer mit unterschiedlichen Anwendungen einsetzbar, die nicht direkt miteinander kommunizieren müssen und nicht "voneinander wissen" müssen. Weiterhin ist das Verfahren hoch skalierbar und damit für die unterschiedlichen Anwendungsfälle bzw. Ausprägungen einsetzbar, bspw. im Bereich der PMSE vom "Ein-Mann-Reporter-Team" bis zur Großveranstaltung.

Außerdem ist zu beachten, dass das Verfahren die optionale Nutzung eines Proxy-Dienstes mit einem lokalen, bspw. bereits lizensierten Frequenzportfolio (ortsbezogene Datenbank) und zusätzliche Frequenzinformationen vorsieht, was eine flexible Frequenznutzung durch die Endgeräte, wie bspw. C-PMSE, ermöglicht.

Eine Basisstation des Nutzers bzw. C-PMSE-Systems registriert sich direkt bei der Datenbank oder über einen Proxy. Die Kommunikationsschnittstelle zum Proxy und zur Datenbank ist identisch, so dass ein C-PMSE-System nicht wissen muss, wo es sich registriert. Durch die Verwendung einer identischen Kommunikationsschnittstelle zum Proxy und zur Datenbank ist eine kostengünstige technische Ausstattung der C-PMSE-Systeme möglich.

Mehrere C-PMSE-Systeme können sich bei dem bzw. über den Proxy registrieren. Der Proxy leitet Registrierungsanfragen von C-PMSE-Systemen entweder an die Datenbank weiter oder weist ihnen direkt, aus einem bereits vorab bei der Datenbank registrierten Frequenzportfolio, eine Frequenz zu. Der Proxy kann eine Übermenge von Frequenzen in seinem Portfolio vorhalten, um bspw. bei Störungen einem C-PMSE-System eine andere Frequenz zuweisen zu können, was die Qualität und Zuverlässigkeit der Übertragung im System steigert.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1: zeigt in einer schematischen Darstellung eine Ausführung der beschriebenen Anordnung zur Durchführung des Verfahrens.
- Figur 2: zeigt eine weitere Ausführung der Anordnung.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

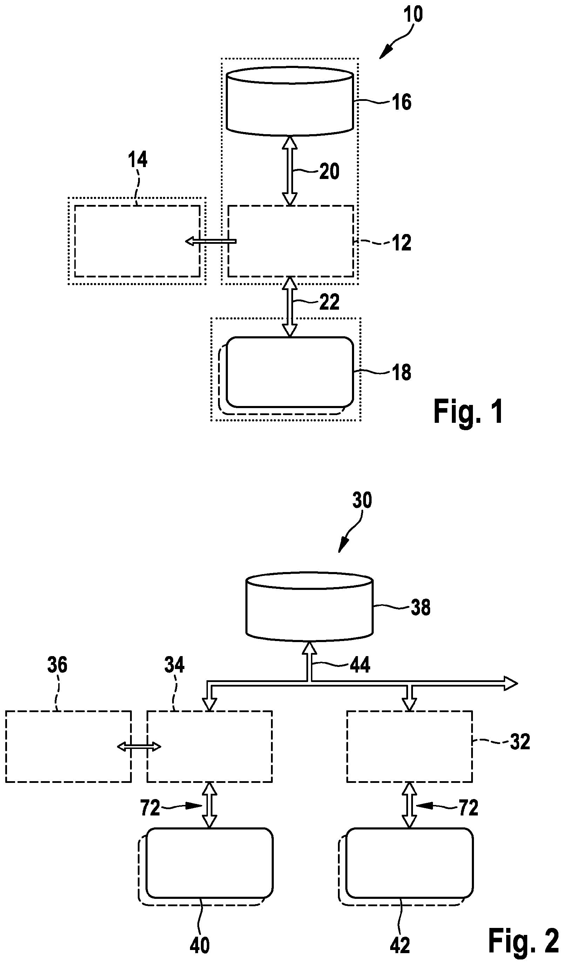

In Figur 1 ist eine Ausführungsform der beschriebenen Anordnung, insgesamt mit der Bezugsziffer 10 bezeichnet, wiedergegeben. Die Darstellung zeigt einen Proxy-Server 12, der auch als Local Spectrum Portfolio Management bezeichnet wird, ein Sensornetzwerk 14, das auch als Information Acquisition and Local Radio Environment Map bezeichnet wird, eine Datenbank 16, die auch als Geolocation based Database bezeichnet wird, und einen Nutzer 18, der in diesem Fall als Basisstation für ein oder mehrere Mikrofone als C-PMSE-System ausgebildet ist.

Zwischen dem Proxy-Server 12 und der Datenbank 16 ist eine generische Schnittstelle 20 vorgesehen. Eine zu Schnittstelle 20 identische Schnittstelle 22 ist auch zwischen dem Nutzer 18 und dem Proxy-Server 12 eingerichtet.

Von dem Nutzer 18 erfolgt eine Anfrage nach einer freien Frequenz bzw. nach einem freien Frequenzbereich über die Schnittstelle 22. Dabei stellt es für den Nutzer bzw. die Basisstation 18 keinen Unterschied dar, ob die Schnittstelle mit dem Proxy-Server 12 oder mit der Datenbank 16 verbunden ist.

Im Fall, dass die Schnittstelle 22 mit dem Proxy-Server 12 verbunden ist, verarbeitet dieser die Anfrage und steht ebenfalls in Kontakt mit dem Sensornetzwerk 14, das dem Proxy-Server 12 Informationen zum Zustand des lokalen Frequenzspektrums geben kann. Hierzu werden Daten von Sensoren in dem Sensornetzwerk 14 genutzt. Der Proxy-Server 12 hat somit Kenntnis vom Zustand des lokalen Frequenzspektrums und kann dies bei der Bearbeitung der Anfrage berücksichtigen. Die Anfrage wird unter Berücksichtigung dieses Zustands über die Schnittstelle 20, die identisch mit der Schnittstelle 22 ist, an die Datenbank weitergegeben oder von dem Proxy-Server selber beantwortet, wenn dieser bereits vorab von der Datenbank zugewiesene Frequenzen oder Frequenzbereiche in seinem Portfolio zur Verfügung hat.

Der Proxy-Server 12 ist bspw. durch eine Festinstallation in Veranstaltungshäusern oder durch ein mobiles Add-on-System realisiert. Der Proxy-Server 12 arbeitet aus Sicht des Nutzers 18 als Proxy der Datenbank 16.

Im Fall, dass die Schnittstelle 22 bzw. die identische Schnittstelle 20 mit der Datenbank 16 verbunden ist, wird die Anfrage des Nutzers 18 direkt von der Datenbank 16 beantwortet.

Die Datenbank 16 enthält Frequenzzuweisungen einer oder mehrerer nationaler Administrationen für die Frequenzvergabe (statisch) und Registrierungen für Frequenzbereiche (dynamisch).

Die Basisstation, die den Nutzer 18 darstellt, ist bspw. als fest installiertes, nomadisches oder mobiles C-PMSE-System ausgebildet, das jeweils aus den PMSE-Komponenten und der C-PMSE-Basisstation mit Cognitive Engine, Radio Ressource Manager usw. besteht.

In Figur 2 ist eine weitere Ausführung der Anordnung 30 gezeigt, die für mehrere unterschiedliche Nutzer ausgelegt ist. Die Darstellung zeigt einen ersten Proxy-Server 32, einen zweiten Proxy-Server 34, ein Sensornetzwerk 36, eine Datenbank 38, ein C-PMSE-System als ersten Nutzer 40 und ein Nicht-C-PMSE-System als zweiten Nutzer 42. Der Austausch zwischen der Datenbank 38 und den Nutzern 40 und 42 erfolgt optional über die Proxy-Server 32 und 34, wobei wiederum eine generische Schnittstelle 44, die als WAN (wide area network) (drahtgebunden oder drahtlos) ausgebildet sein kann, eingesetzt wird.

Grundsätzlich können 1 bis N, somit eine beliebige Anzahl von Nutzern, C-PMSE-Systeme oder Nicht-C-PMSE-Systeme vorgesehen sein, die in Räumen (indoor), außerhalb von Räumen (outdoor), statisch oder sich bewegend ausgebildet sein können.

Alle C-PMSE-Systeme und Nicht-C-PMSE-Systeme können mit einem Proxy-Server 32, 34 oder mit der Datenbank verbunden sein. Zusätzlich kann an jeden Proxy-Server 32, 34 ein Sensornetzwerk 36 angeschlossen sein.

Zum Austausch von Informationen zwischen den Proxy-Servern 32 und 34 und den Nutzern 40, 42 sind ebenfalls generische Schnittstellen 72 vorgesehen, die als ein local area network bzw. LAN (drahtgebunden oder drahtlos) ausgebildet sein können.

Grundsätzlich kann der Proxy-Server eine von einem Nutzer gesendete Anfrage an die Datenbank weiterleiten und eine Antwort der Datenbank wiederum an den Nutzer weiterleiten. Es kann aber auch vorgesehen sein, dass der Proxy-Server die Anfrage nicht weiterleitet, sondern diese auf Grund eigener Informationen beantworten kann. Außerdem kann der Proxy-Server autonom eine Anfrage an die Datenbank richten ohne Anfrage des Nutzers. Informationen bezieht der Proxy-Server bspw. über das verbundene Sensornetzwerk, das den Zustand des lokalen Frequenzspektrums bspw. in regelmäßigen Abständen oder kontinuierlich überwacht. Ein Proxy-Server ist eine Kommunikationsschnittstelle in einem Netzwerk, der als Vermittler zwischen zwei Seiten arbeitet.

Nachstehend sind die Funktionen der in den Figuren 1 und 2 gezeigten Blöcke näher erläutert:
Datenbank (Geolocation based Database)
   - Bereitstellung der Informationen von Primärnutzern (Ort, Frequenzbereich, Leistung, geografische Ausbreitung, ggf. Technologie),
      statischer Anteil, derzeit meist identisch mit dem nationalen Frequenzzuweisungsplan,

   - Bearbeitung von Registrierungsanfragen von Nutzern (Ort, Frequenzbereich, Zeitraum, geografische Ausdehnung, ggf. Technologie), dynamischer Anteil.
Proxy-Server (Local Spectrum Portfolio Management)
   - Bearbeitung von Registrierungsanfragen von lokalen Nutzern (Ort, Frequenzbereich, Zeitraum, geografische Ausdehnung, ggf. Technologie),
   - lokale Verwaltung und Zuweisung von Frequenzbereichen für die C-PMSE-Systeme,
   - Verwertung der Mess- und Auswertungsinformationen (Zustand des Mediums Funkspektrum und dessen Ursachen) der "Information Acquisition and Local Map".
Sensornetzwerk (Information Acquisition and Local Radio Environment Map)
   - kontinuierliches Scannen und Zustandsüberwachung des Frequenzportfolios und weiterer Frequenzbereiche von Interesse sowie Erkennung der Nutzung bzw. von potentiellen Risiken einer Nutzung,
   - Bestimmung und Nachverfolgung der Örtlichkeit von Signalquellen,
   - Verzeichnung des Zustands des Mediums (Funkspektrum) und dessen Ursachen in einer lokalen Radio Environment Map (REM) auf Basis der Mess- und Auswerteinformationen eines jeden Scanning Receivers (indirekter Bezug zur Örtlichkeit, wenn der Ort des Scanning Receivers hinreichend bekannt ist).
Nutzer (C-PMSE-System)
   - Bereitstellung des herkömmlichen Betriebs,
   - automatische Auswahl des Nutzfrequenzportfolios auf Basis von fortlaufend aktualisierten Mess- und Auswerteinformationen der eigenen Informationserfassung oder der Informationen, die über den Proxy bereitgestellt werden,
   - Initiierung der Registrierung des Nutzfrequenzportfolios für das System,
   - Initiierung von Aufträgen an die interne oder externe Informationserfassung zur Gewinnung von spezifischen Informationen,
   - Entscheidung der eigenen Funkfrequenzbelegung anhand der fortlaufend aktualisierten Mess- und Auswerteinformationen der Informationserfassung,
   - Adaptierung der PMSE-Komponenten bzgl. der Übertragungsparameter,
   - fortlaufende Überwachung der Übertragungsqualität der PMSE-Strecken.

## Patentansprüche

1. Verfahren zum automatisierten Zuweisen von Frequenzbereichen in einem Netzwerk für eine drahtlose Kommunikation, bei dem von mindestens einem Nutzer (18, 40, 42) eine Anfrage an eine Datenbank (16, 38) gerichtet wird, in der Informationen zu Frequenzbereichen hinterlegt sind, wobei ein Proxy-Server (12, 32, 34) vorgesehen ist, der die mindestens eine Anfrage bearbeitet,
**dadurch gekennzeichnet, dass** der Proxy-Server (12, 32, 34) die Anfrage an die Datenbank (16, 38) nicht weiterleitet, sondern die Anfrage des Nutzers (18, 40, 42) auf Grund eigener Informationen beantwortet und dem Nutzer (18, 40, 42) direkt eine Frequenz aus einem bereits vorab bei der Datenbank (16, 38) registrierten Frequenzportfolio zuweist.

2. Verfahren nach Anspruch 1, bei dem der Proxy-Server (12, 32, 34) die Anfrage an die Datenbank (16, 38) weiterleitet und eine Antwort von der Datenbank (16, 38) an den Nutzer (18, 40, 42) weiterleitet.

3. Verfahren nach Anspruch 1, bei dem der Proxy-Server (12, 32, 34) autonom eine Anfrage an die Datenbank (16, 38) richtet, ohne eine Anfrage eines Nutzers (18, 40, 42) bekommen zu haben.

4. Anordnung zum automatisierten Zuweisen von Frequenzbereichen in einem Netzwerk, insbesondere zur Durchführung eines Verfahrens nach einem der Ansprüche 1 bis 3, mit einer Datenbank (16, 38) und einem Proxy-Server (12, 32, 34), der dazu ausgebildet ist, Anfragen von mindestens einem Nutzer zu verarbeiten,
**dadurch gekennzeichnet, dass** der Proxy-Server (12, 32, 34) ausgebildet ist, die Anfrage an die Datenbank (16, 38) nicht weiterzuleiten, sondern die Anfrage des Nutzers (18, 40, 42) auf Grund eigener Informationen zu beantworten und dem Nutzer (18, 40, 42) direkt eine Frequenz aus einem bereits vorab bei der Datenbank (16, 38) registrierten Frequenzportfolio zuzuweisen.

5. Anordnung nach Anspruch 4, bei der der Proxy-Server (12, 32, 34) mit einem Sensornetzwerk (14, 36) verbunden ist.

6. Anordnung nach Anspruch 4 oder 5, bei der der Proxy-Server (12, 32, 34) und ggf. ein angeschlossenes Sensornetzwerk (14, 36) durch eine Festinstallation realisiert ist bzw. sind.

7. Anordnung nach Anspruch 4 oder 5, bei der der Proxy-Server (12, 32, 34) und ggf. ein angeschlossenes Sensornetzwerk (14, 36) durch ein mobiles System realisiert ist bzw. sind.

8. Anordnung nach einem der Ansprüche 4 bis 7, bei der der Proxy-Server (12, 32, 34) über eine generische Schnittstelle (20, 44) mit der Datenbank (16, 38) verbunden ist.

9. Anordnung nach einem der Ansprüche 4 bis 8, bei der der mindestens eine Nutzer (18, 40, 42) mit dem Proxy-Server (12, 32, 34) über eine generische Schnittstelle (22, 72) verbunden ist.

10. Anordnung nach Anspruch 9, bei der die generischen Schnittstellen (20, 22, 44, 72) zwischen Proxy-Server (12, 32, 34) und Datenbank (16, 38) sowie zwischen Nutzer (18, 40, 42) und Proxy-Server (12, 32, 34) identisch sind.

11. Anordnung nach einem der Ansprüche 8 bis 10, bei der die Schnittstellen (20, 22, 44, 72) bidirektional und drahtlos, drahtgebunden oder gemischt, drahtlos oder drahtgebunden ausgeführt sind.

12. Anordnung nach einem der Ansprüche 8 bis 11, bei der dem Nutzer (18, 40, 42) eine Schnittstelle (20, 22, 44, 72) zugeordnet ist, die sowohl für die Kommunikation mit der Datenbank (16, 38) als auch für die Kommunikation mit dem Proxy-Server (12, 32, 34) dient.

## Claims

1. Method for the automated allocation of frequency ranges in a network for a wireless communication, in which at least one user (18, 40, 42) sends a query to a database (16, 38) that stores information pertaining to frequency ranges, wherein a proxy server (12, 32, 34) is provided that handles the at least one query,
**characterized in that** the proxy server (12, 32, 34) does not forward the query to the database (16, 38) but rather responds to the query from the user (18, 40, 42) on the basis of its own information and directly allocates the user (18, 40, 42) a frequency from a frequency portfolio already registered in advance in the database (16, 38).

2. Method according to Claim 1, in which the proxy server (12, 32, 34) forwards the query to the database (16, 38) and forwards a response from the database (16, 38) to the user (18, 40, 42).

3. Method according to Claim 1, in which the proxy server (12, 32, 34) autonomously sends a query to the database (16, 38) without having received a query from a user (18, 40, 42).

4. Arrangement for the automated allocation of frequency ranges in a network, particularly for performing a method according to one of Claims 1 to 3, having a database (16, 38) and a proxy server (12, 32, 34) that is configured to process queries from at least one user,
**characterized in that** the proxy server (12, 32, 34) is configured not to forward the query to the database (16, 38) but rather to respond to the query from the user (18, 40, 42) on the basis of its own information and to directly allocate the user (18, 40, 42) a frequency from a frequency portfolio already registered in advance in the database (16, 38).

5. Arrangement according to Claim 4, in which the proxy server (12, 32, 34) is connected to a sensor network (14, 36).

6. Arrangement according to Claim 4 or 5, in which the proxy server (12, 32, 34) and possibly a connected sensor network (14, 36) is or are realized by a permanent installation.

7. Arrangement according to Claim 4 or 5, in which the proxy server (12, 32, 34) and possibly a connected sensor network (14, 36) is or are realized by a mobile system.

8. Arrangement according to one of Claims 4 to 7, in which the proxy server (12, 32, 34) is connected to the database (16, 38) via a generic interface (20, 44).

9. Arrangement according to one of Claims 4 to 8, in which the at least one user (18, 40, 42) is connected to the proxy server (12, 32, 34) via a generic interface (22, 72).

10. Arrangement according to Claim 9, in which the generic interfaces (20, 22, 44, 72) between proxy server (12, 32, 34) and database (16, 38) and between user (18, 40, 42) and proxy server (12, 32, 34) are identical.

11. Arrangement according to one of Claims 8 to 10, in which the interfaces (20, 22, 44, 72) are embodied in bidirectional and wireless, wired or mixed, wireless or wired form.

12. Arrangement according to one of Claims 8 to 11, in which the user (18, 40, 42) has an associated interface (20, 22, 44, 72) that is used both for the communication with the database (16, 38) and for the communication with the proxy server (12, 32, 34).

## Revendications

1. Procédé d'attribution automatisée de plages de fréquences dans un réseau destiné à une communication sans fil, dans lequel une demande est envoyée par au moins un utilisateur (18, 40, 42) à une base de données (16, 38) dans laquelle sont stockées des informations concernant des plages de fréquences, dans lequel il est prévu un serveur mandataire (12, 32, 34) qui traite l'au moins une demande,
**caractérisé en ce que** le serveur mandataire (12, 32, 34) n'achemine pas la demande à la base de données (16, 38), mais répond à la demande de l'utilisateur (18, 40, 42) sur la base d'informations qui lui sont propres et attribue directement à l'utilisateur (18, 40, 42) une fréquence provenant d'un portefeuille de fréquences préalablement enregistré dans la base de données (16, 38).

2. Procédé selon la revendication 1, dans lequel le serveur mandataire (12, 32, 34) achemine la demande à la base de données (16, 38) et achemine une réponse de la base de données (16, 38) à l'utilisateur (18, 40, 42).

3. Procédé selon la revendication 1, dans lequel le serveur mandataire (12, 32, 34) envoie de manière autonome une demande à la base de données (16, 38), sans avoir reçu de demande d'un utilisateur (18, 40, 42).

4. Système d'attribution automatisée de plages de fréquences dans un réseau, notamment pour la mise en oeuvre d'un procédé selon l'une quelconque des revendications 1 à 3, comportant une base de données (16, 38) et un serveur mandataire (12, 32, 34) qui est réalisé de manière à traiter des demandes d'au moins un utilisateur,
**caractérisé en ce que** le serveur mandataire (12, 32, 34) est réalisé de manière à ne pas acheminer la demande à la base de données (16, 38), mais pour répondre à la demande de l'utilisateur (18, 40, 42) sur la base d'informations qui luis sont propres et pour attribuer directement à l'utilisateur (18, 40, 42) une fréquence provenant d'un portefeuille de fréquences préalablement enregistré dans la base de données (16, 38).

5. Système selon la revendication 4, dans lequel le serveur mandataire (12, 32, 34) est relié à un réseau de capteurs (14, 36).

6. Système selon la revendication 4 ou 5, dans lequel le serveur mandataire (12, 32, 34) et le cas échéant, un réseau de capteurs (14, 36) raccordé est ou sont réalisé(s) par une installation fixe.

7. Système selon la revendication 4 ou 5, dans lequel le serveur mandataire (12, 32, 34) et le cas échéant, un réseau de capteurs (14, 36) raccordé est ou sont réalisé(s) par un système mobile.

8. Système selon l'une quelconque des revendications 4 à 7, dans lequel le serveur mandataire (12, 32, 34) est relié à la base de données (16, 38) par l'intermédiaire d'une interface générique (20, 44).

9. Système selon l'une quelconque des revendications 4 à 8, dans lequel l'au moins un utilisateur (18, 40, 42) est relié au serveur mandataire (12, 32, 34) par l'intermédiaire d'une interface générique (22, 72).

10. Système selon la revendication 9, dans lequel les interfaces génériques (20, 22, 44, 72) entre le serveur mandataire (12, 32, 34) et la base de données (16, 38) et entre l'utilisateur (18, 40, 42) et le serveur mandataire (12, 32, 34) sont identiques.

11. Système selon l'une quelconque des revendications 8 à 10, dans lequel les interfaces (20, 22, 44, 72) sont réalisées de manière bidirectionnelle et par liaison sans fil, par liaison par fil ou de manière mixte, par liaison sans fil ou par liaison par fil.

12. Système selon l'une quelconque des revendications 8 à 11, dans lequel une interface (20, 22, 44, 72) est associée à l'utilisateur (18, 40, 42), laquelle interface est utilisée à la fois pour la communication avec la base de données (16, 38) et pour la communication avec le serveur mandataire (12, 32, 34).
